# EUROPEAN PATENT SPECIFICATION

(11) **EP 0 938 039 B1**
(45) Date of publication and mention of the grant of the patent: **15.02.2006**
(21) Application number: 99109587.8
(22) Date of filing: 07.10.1992
(51) Int. Cl.: G06F 3/033

(54) **An apparatus for manipulating an object displayed on a display device**
Gerät zur Manipulation eines auf einem Bildschirm angezeigten Objektes
Appareil pour la manipulation d'un objet affiché sur une unité d'affichage

(30) Priority: 07.10.1991 JP 25823291
(43) Date of publication of application: 25.08.1999
(62) Divisional of application: 92117111.2
(73) Proprietor: FUJITSU LIMITED, Kawasaki-shi, Kanagawa 211-8588 (JP)
(72) Inventor: Minakuchi, Yu, c/o Fujitsu Limited, Kawasaki-shi, Kanagawa 211-8588 (JP); Okuyama, Satoshi, c/o Fujitsu Limited, Kawasaki-shi, Kanagawa 211-8588 (JP); Kamata, Hajime, c/o Fujitsu Limited, Kawasaki-shi, Kanagawa 211-8588 (JP); Fukue, Akiko, Suginami-ku, Tokyo 167 (JP)
(74) Representative: Stebbing, Timothy Charles

(56) References cited:
- EP-A- 0 279 652
- EP-A- 0 314 395
- EP-A- 0 448 496
- PATENT ABSTRACTS OF JAPAN vol. 011, no. 383 (P-646), 15 December 1987 (1987-12-15) & JP 62 150477 A (CANON INC), 4 July 1987 (1987-07-04)
- "Virtual Integrated Mouse" IBM TECHNICAL DISCLOSURE BULLETIN., vol. 30, no. 10, March 1988 (1988-03), pages 398-401, XP002129895 IBM CORP. NEW YORK., US ISSN: 0018-8689

## Description

The present invention relates to an apparatus for use with a display device to manipulate an object displayed on the display device.

As use of computer systems for data processing has become widespread in recent years, more and more users are being required to input data to and converse with data processors such as work stations and personal computers. A vast range of application programs are available for recent data processors and even a complicated application can be processed by using such application programs in combination. However, there is a problem that such data processors are very difficult to handle, especially to manipulate an object displayed on a display device, for those who have little knowledge of computers.

Therefore, an apparatus for manipulating an object displayed on a display device, which is easy to use even for a person who has no special knowledge of computers, is in great demand.

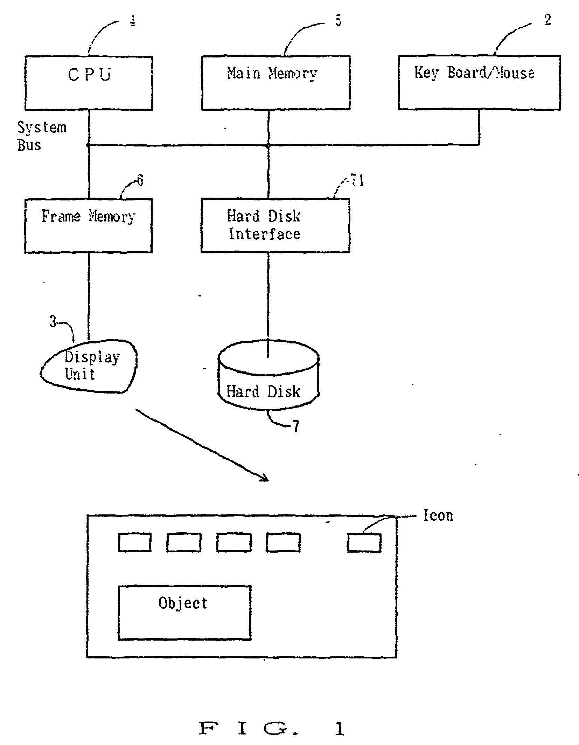

Fig. 1 illustrates a computer system with a conventional user interface.

A computer system with a conventional user interface consists mainly of a central processing unit (CPU) 4, a main memory 5, a keyboard/mouse 2, a frame memory 60 and a hard disk interface 71, which are interconnected via a system bus interface, and also a hard disk 7 and a display unit 3, which are connected to the system bus interface via the hard disk interface and the frame memory 6, respectively. The main memory 5 stores a system control program and application programs which handle graphics processing, and provides a work area for use by the programs. The CPU 4 performs display operations under control of the programs. The hard disk 7 stores a data file for graphics to be displayed on the display unit 3. The frame memory 6 stores a frame of picture (or object) data to be displayed on the display unit 3.

To manipulate an object displayed on a display unit 3 in the above system, an operator is required to input a command for manipulating the object by using a keyboard/mouse 2 or to select an icon (a symbolic representation of a computer function) displayed on a display unit 3 by using the keyboard/mouse 2 in order to command a desired function. However, it is troublesome and annoying to use a keyboard/mouse and icons and a person with less knowledge of computers tends to be allergic to even touching a keyboard/mouse.

Therefore, it is a great problem that such data processors are very difficult to handle for those who have less knowledge of computers.

It is therefore desirable to provide an apparatus which can easily manipulate an object displayed on a display unit.

It is also desirable to provide a user interface with which a user can easily manipulate an object displayed on a display unit.

IBM Technical Disclosure Bulletin, vol. 33, No. 1B, June 1990, pages 277-278 discloses an apparatus according to the preamble of accompanying claim 1. In this prior art, icons resembling three-dimensional push buttons are displayed on the panel (screen). These icons can be "manipulated" by pushing them in or out, the icon display changing in appearance to reflect the amount of depression of the push button. There is only one type of object (icon) and they are displayed at fixed positions on the screen.

JP 62 150477A by Canon Inc. discloses a touch panel mounted over a display device so that a graphic cursor can be moved by a finger touch on a prescribed area (graphic moving command area) of the panel. A coordinate displacement detection means detects the direction, distance and speed of a coordinate displacement of the finger. That is, that manipulation is determined based on a change in position of the graphic moving command area.

EP-A-0 314 395 by Crosfield Electronics Ltd. discloses a method of manipulating (moving and deforming) an image on a monitor screen interactively by selecting some points (e.g. two points on the image and a point on the screen) and moving a cursor on the monitor screen. That is, the manipulation is determined based on the user-selected fixed points and a change in the user-specified cursor position.

EP-A-0 279 652 by Sensor Frame Inc. discloses a touch panel mounted on a display screen, employing light beams and sensors arranged to detect occlusion of the light beams by fingers. Objects on the screen are manipulated by interpreting movements of the fingers. For example, virtual knobs displayed on the screen may be rotated using two fingers; other objects may be rotated and translated.

According to a first aspect of the present invention, there is provided an apparatus for use with a display device to manipulate an object displayed on the display device, the apparatus comprising a touch panel, representing a display surface of the display device, which is sensitive to characteristics of a touching contact on the touch panel, the characteristics including at least pressure and co-ordinate positions of the touching contact, for outputting corresponding touch panel information representing the characteristics of the touching contact on the touch panel; and object manipulation means for manipulating and displaying the object on the display device in response to said touch panel information, the object manipulation means comprising file storage means for storing at least one data file which stores object data for displaying the object; display information storage means for storing object information including an object type which specifies the shape or physical properties of the object, and display position information which specifies the position of the object on the display device; and display control means responsive to the touch panel information and to the object information included in said display information storage means, for recognizing the type of manipulation of the object in accordance with the touch panel information, the display position information, and the object type, and for performing the manipulation of the object on the display device in accordance with the recognized type of manipulation; wherein the type of manipulation includes a distort-restore manipulation of the object in which said display control means is responsive to the pressure characteristics of the touching contact to distort and restore the object on the display device, the amount of distortion of the object being calculated on the base of said pressure characteristics of the touching contact.

Thus, the present invention can include a touch-sensitive panel (e.g. touch screen), means storing a plurality of data files, display information storage means and display control means, which can be used with a display device of a controller for controlling the above apparatus.

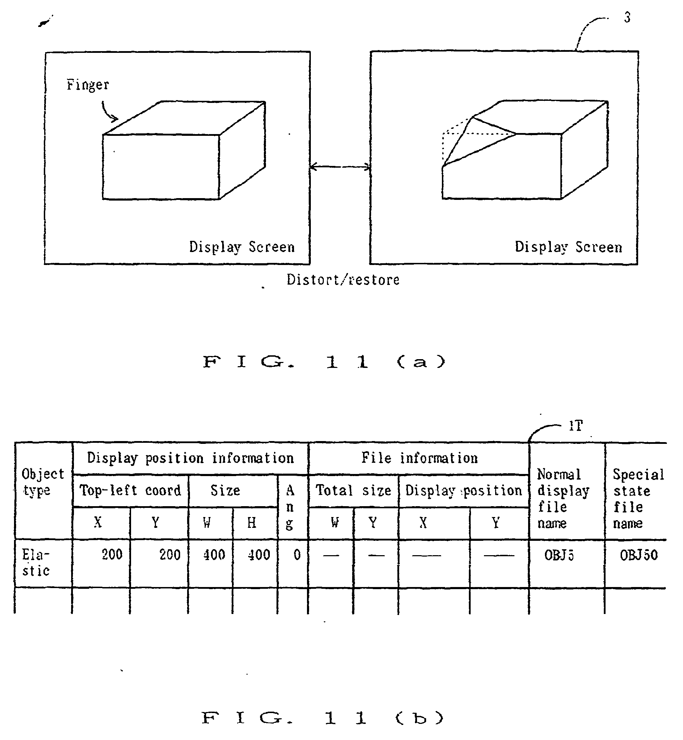

Reference is made, by way of example, to the accompanying drawings, in which Fig. 11 is particularly relevant to the invention, and in which:
Fig. 1 illustrates a computer system with a conventional user interface;
Fig. 2 is a configuration diagram of a touch-screen-equipped workstation, to which the present invention may be applied;
Fig. 3 is a schematic diagram illustrating the principle of the present invention;
Fig. 4(a) shows a display information table;
Fig. 4(b) shows touch screen information;
Fig. 5 is a flowchart illustrating a pick manipulation;
Fig. 6 is a diagram illustrating a pick manipulation;
Fig. 7 is a diagram illustrating a scroll manipulation;
Fig. 8 is a diagram illustrating a push manipulation;
Fig. 9 is a diagram illustrating a flip manipulation;
Fig. 10 is a diagram illustrating a roll manipulation; and
Fig. 11 is a diagram illustrating a distort-restore manipulation.

Throughout the above-mentioned drawings, identical reference numerals are used to designate the same or similar component parts.

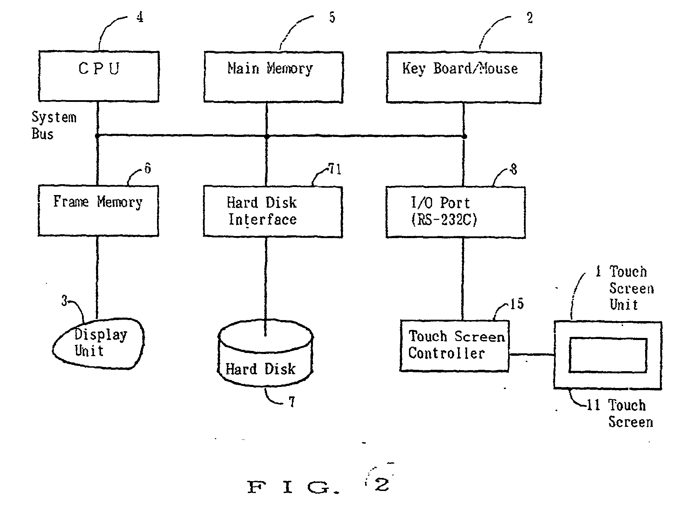

Fig. 2 is a configuration diagram of a touch screen-equipped workstation for implementing the present invention.

In addition to the conventional system shown in Fig. 1, the system includes an input-output (abbreviated to I/O) port 8, a touch screen controller 15 and a touch screen unit 1 with a touch screen 11. The touch screen controller 15, connected to the input-output port 8 through an RS-232C interface, controls the touch screen unit 1. The touch screen unit 1, which is sensitive to a position or positions (X-Y coordinates) where it is touched, and preferably also to a pressure applied to it, acts as a user interface that allows a user to send signals to the CPU by touching an area thereon with a body, such as a finger or a pencil.

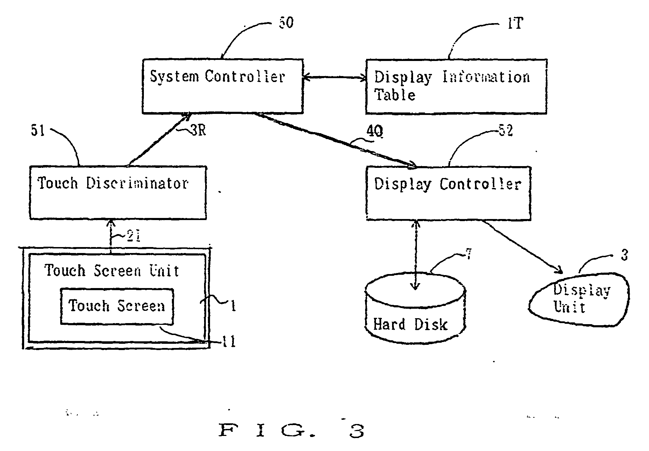

Fig. 3 is a schematic diagram illustrating the principle of the present invention.

For easy understanding of the principle, the input-output port 8, touch screen controller 15 and touch screen unit 1 shown in Fig. 2 are represented by the touch screen unit 1; and the frame memory 6 and display unit 3 are represented by the display unit 3.

A system controller 50, touch discriminator 51, display controller 52 and display information table 1T, which are stored in the main memory 5, control display operations featured by the present invention

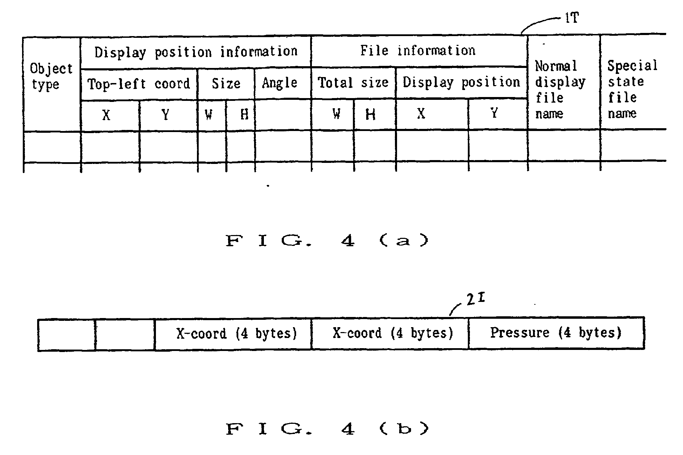

Fig. 4(a) shows a display information table. Fig. 4(b) shows touch screen information.

A display information table 1T, which is provided in the main memory 5, corresponding to objects, includes an object type, display position information, file information, normal-display file name and special-state file name. The object type defines the type including the shape, properties, circumstances, etc., of the object. The display position information defines the size of the object (width, height), and the position (top-left coordinates X,Y) and the angle at which the object is displayed on the display unit 1. The file information stored in the display data file, which is used for an object which is so large in size that it requires scrolling to view the whole object, defines the size (width W, height H) of the whole object relative to the display screen size, and also the position (top-left co-ordinates X, Y) of the object portion being displayed on the display device, relative to the whole object data. The normal display file name specifies a normal display file where object data for displaying a normal state of the object is stored. The special-state file name specifies a special-state file where object data for displaying a special-state (e.g. turn-over indication of display color, used for displaying intermediate process of manipulating the object) of the object is stored.

Touch-screen information 21, which is sent from the touch screen unit 1, includes a touch position (X-Y coordinates) where the touch screen 11 is touched and a pressure applied thereon.

Following are embodiments of the present invention,

(1) The touch discriminator 51, based on the touch screen information 21 from the touch screen unit 1, discriminates the type of a touch an operator's finger has on the touch screen 11, that is, a touch type including, i.e., a "continuous touch start" and "continuous touch end" explained later. The touch discriminator 51 sends to the system controller 50, the result of the discrimination as a touch report 3R, which includes a touch type and touch coordinates.

Based on the touch report 3R from the touch discriminator 51 and the display information table 1T, the system controller 50 determines the type of a manipulation conducted by an operator and, according to the determination, updates the display information table 1T. Then, the system controller 50 sends to the display controller 52, a display update request 4Q along with "display update data" which includes contents of the display information table 1T updated (including display position information, file information, normal display file name and special-state file name.

On receipt of the display update request 4Q from the system controller 50, the display controller 52 reads display file data (including object data) specified by the file name frc. the hard disk 7 and stores the data into the main memory 5. The display controller 52 then updates the object data in accordance with the display update data from the system controller 50 and loads the thus-updated object data into the frame memory 6 to display the object, as manipulated by the operator on the touch screen unit 1.

Thus, the present invention determines a manipulation to be conducted on the object displayed, based on the touch screen information 21 which results from an operator's touching the touch screen 11 and the display information table 1T which defines the object's shape, physical properties, display position, etc. It then displays the object according to the manipulation determined, as intended by the operator.

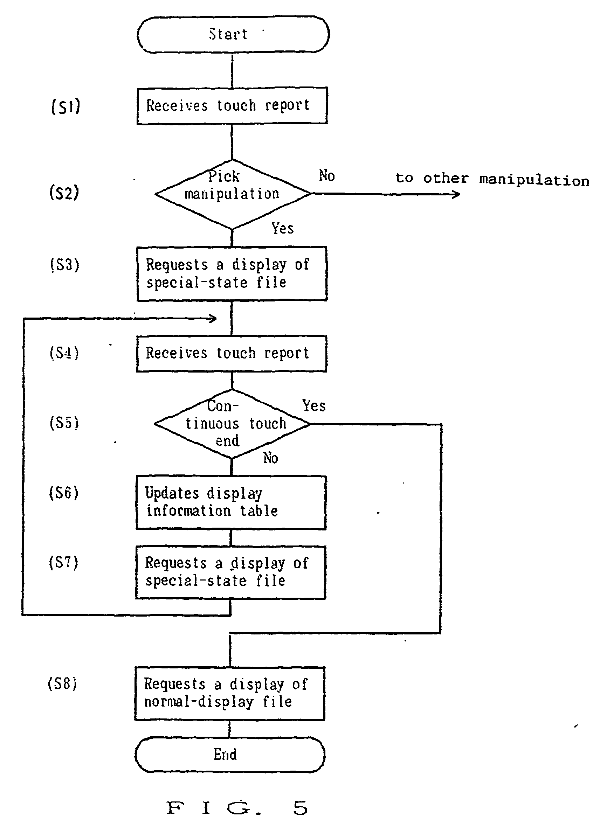

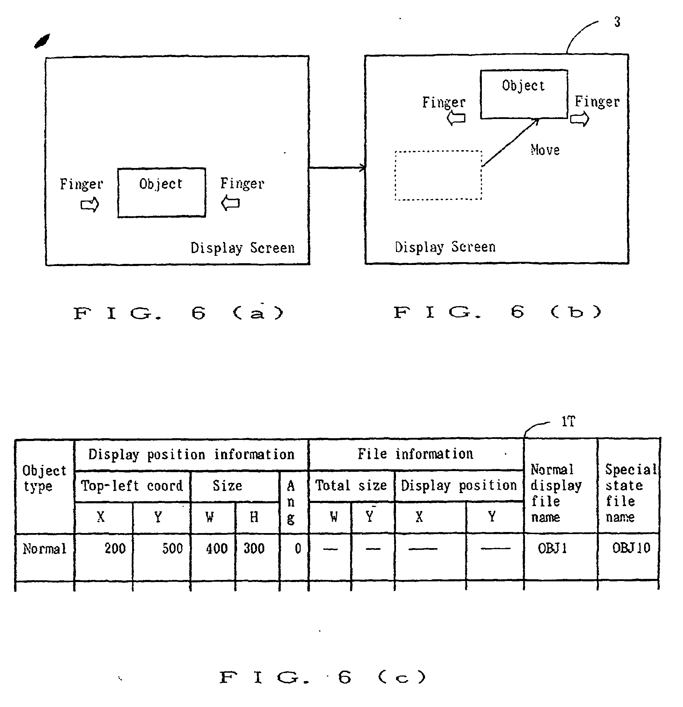

### (2) Pick manipulation (see Figs. 5 and 6.)

A pick manipulation is conducted in such a way as an object is picked up at a position on the display surface of the display unit 3 and placed at another position.

Fig. 5 is a flowchart illustrating a pick manipulation. Fig. 6 is a diagram illustrating a pick manipulation.

A pick manipulation is carried out according to the following steps (S1-S8) in Fig. 5:
(S1) The system controller 50 receives a touch report 3R from the touch discriminator 51.
(S2) The system controller 50 checks the touch report 3R to see whether the object-finger relation is a pick manipulation as shown in Fig. 6(a), based on the touch report 3R and contents of the display information table 1T shown in Fig. 6(c). When the relation is not a pick manipulation, the system controller 50 checks the touch report 3R for other manipulation.
(S3) When the relation is a pick manipulation, the system controller 50 sends a.display update request 4Q including "display update data", commanding that the special-state file (turn-over indication) be displayed at the position specified by the display information table 1T.
(S4) The system controller 50 receives a touch report 3R.
(S5) The system controller 50 determines whether the touch report 3R includes a "continuous touch end", which occurs when the finger-object relation is as in Fig. 6(b). When a "continuous touch end" is reported, the operation goes to step (S8).
(S6) Otherwise, the system controller 50 updates the display position information "coordinates (X, Y)" of the display information table 1T so that the object is positioned between the two fingers.
(S7) The system controller 50 sends display update request 4Q to the display controller 52, commanding that the special-state file be displayed according to the display information table 1T updated, and returns to step (S4).
(S8) When "continuous touch end" is reported by a touch report 3R, the system controller 50 sends a display update request 4Q to the display controller 52, commanding that the normal-display file be displayed at the position specified in the display information table 1T.

Following manipulations are carried out in the same way as described in the above flowchart of the pick manipulation.

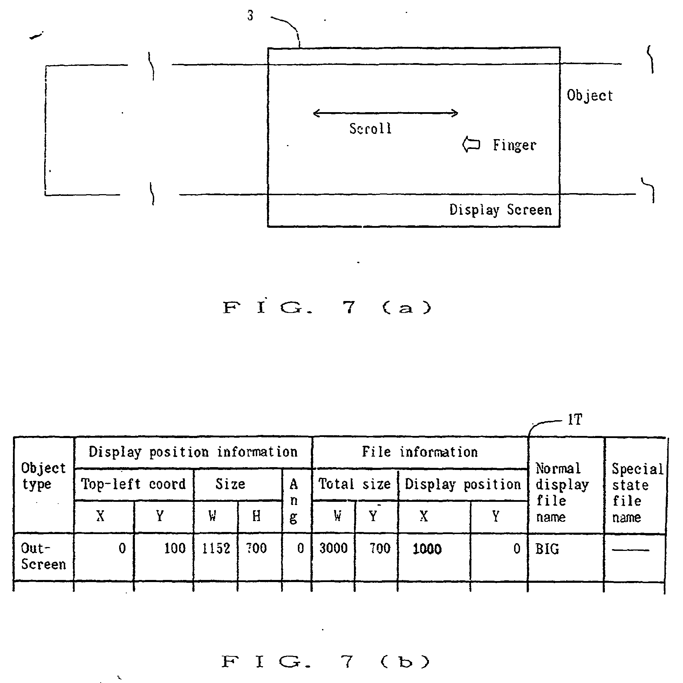

### (3) Scroll manipulation (see Fig. 7.)

A scroll manipulation is conducted in such a way as an object extending outside of the display surface of the display unit 3 is moved into and out of the display surface.

Fig. 7 is a diagram illustrating a scroll manipulation.

On determining that the finger moves while touching the touch screen 11 based on the touch screen information 21 from the touch screen unit 1, the discriminator 51 sends to the system controller 50, a touch report 3R including "continuous touch start" for the touch type and also "coordinates (800, 800)" for the touch position. As another touch screen information 21 comes in, the discriminator 51 sends a touch report 3R including "continuous touch in progress" and coordinates (780, 800). When the touch screen information 21 is not sent for more than 100 milliseconds, for example, the discriminator 51 sends a touch report 3R including "continuous touch end" and coordinates (700, 800) to the system controller 50.

when a "continuous touch start" is reported and the "object type" is defined as "out-screen" in the display information table 1T, the system controller 50 recognizes the object as a large one extending beyond the display screen. Then, the system controller 50 determines the speed at which the finger has moved from right to left, for example, based on a change in the X-coordinate in the touch report 3R.

Depending on whether the finger has moved at a speed of more (high-speed) or less (normal-speed) than for example 20 dots (pixels) e.g. since the last check, the display screen is scrolled first at an interval of 100 or 500 milliseconds, respectively. Then, the interval, at which the display update request 4Q is sent to the display controller 52, is increased by a factor 1.5 at each touch report 3R and, when the interval reaches 2 seconds, the scrolling is stopped.

Practically, the screen is so controlled that it starts scrolling at an above-mentioned speed after a finger has moved a distance of 4 dots or more. That is, on recognizing that the finger has moved for that distance, the system controller 50 updates the file information "display position X" of the display information table 1T so that the object is displayed to the left by 10 dots, for example. Then, it sends to the display controller 52, a display update request including display position information, file information and normal display file name from the display information table 1T updated.

The display controller 52 reads from the hard disk a display file specified by the normal display file name and loads it in the main memory 5. The display controller 52 then transfers only the part of the display file specified by the file information "display position X" of the display information table 1T, from the main memory 5 to the appropriate location of the frame memory 6.

In the same way, the system controller 50 sends a display update request 4Q to the display controller 52 every time it receives a touch report 3R .

When another "continuous touch" is reported before the scroll currently in progress comes to a stop, a new scroll can start from this point and at the first speed described above.

### (4) Scroll-stop manipulation (see Fig. 7.)

Fig. 7 is a diagram illustrating a scroll manipulation.

When a touch position given by a touch report 3R is the same as or approximately 5 dots apart from the position of the scrolling currently in progress, the system controller 50 doubles the frequency with which display update requests 4Q are sent to the display controller 52, in order to put an end to the scrolling.

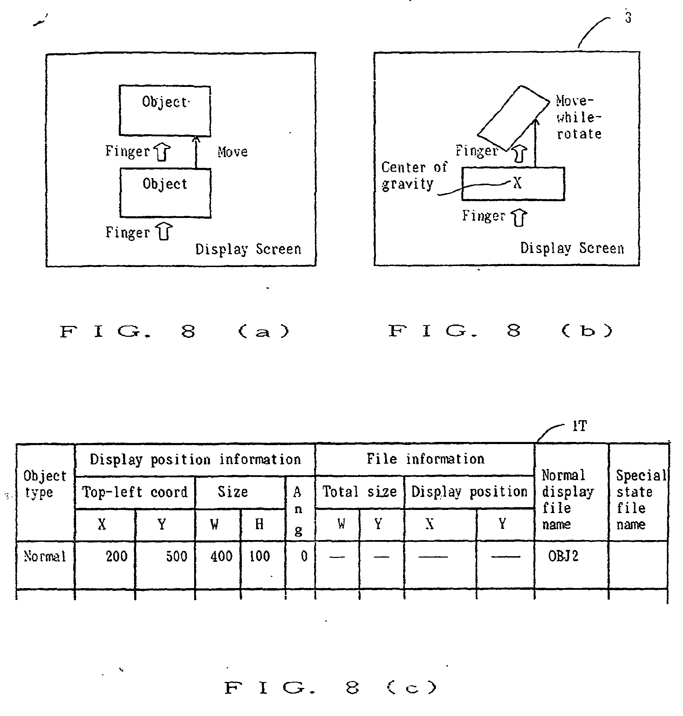

### (5) Push manipulation (see Fig. 8.)

A push manipulation is conducted in such a way as an object is pushed on the display surface of the display unit 3.

Fig. 8 is a diagram illustrating a push manipulation.

The system controller 50 determines the type of a manipulation, based on the touch report 3R and contents of the display information table 1T shown in Fig. 8(c). When the manipulation is a push manipulation as shown in Fig. 8(a), the system controller 50 sends to the display controller 52, a display update request 4Q including display position information, file information and normal display file name so that the object is displayed close to the finger position reported by the touch report 3R. The above display operation is repeated until a "continuous touch end" is reported by a touch report 3R.

### (6) Push-while-rotate manipulation (see Fig. 8.)

A push-while-rotate manipulation is conducted in such a way as an object is pushed at a position off its center (or the center of gravity) and it moves rotating on the display surface of the display unit 3.

Fig. 8 is a diagram illustrating a push manipulation.

The system controller 50 determines the type of a manipulation, based on the touch report 3R and contents of the display information table 1T shown in Fig. 8(c). When the manipulation is a push-while-rotate manipulation as shown in Fig. 8(b), the system controller 50 sends to the display controller 52, display update requests 4Q with the angle of rotation increasing by 2 degrees, i.e., while increasing the angle in the display information table 1T shown in Fig. 8(c).

The display controller 52 reads the display file from the hard disk and loads the data in the main memory 5, rotates the object by the angle and with the left-top coordinates (X, Y) as a rotational center, as specified by the display update request 4Q, and transfers the data with the object rotated, from the main memory 5 to the frame memory 6.

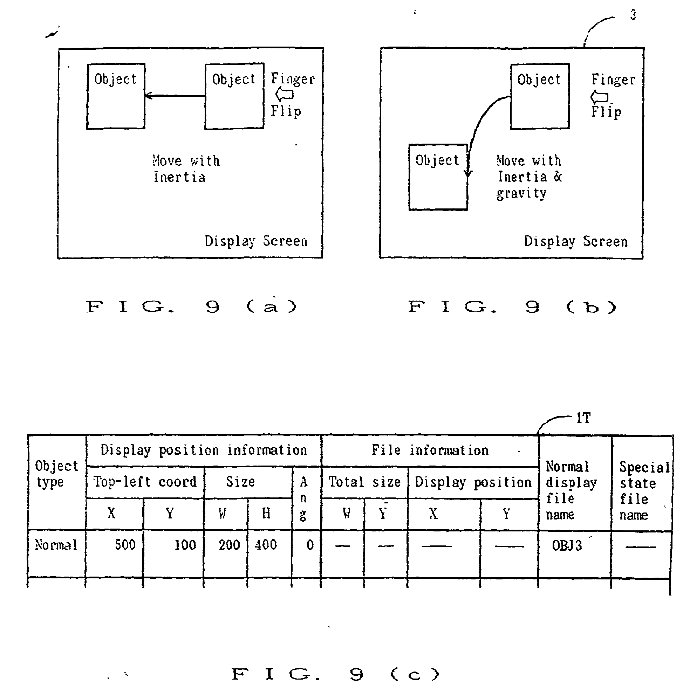

### (7) Flip manipulation (see Fig. 9.)

A flip manipulation is conducted in such a way as a finger flips an object or touches the object from a remote position at a high speed on the display surface of the display unit 3.

Fig. 9 is a diagram illustrating a flip manipulation.

When a touch report 3R is input from the touch discriminator 51, the system controller 50 descriminates the type of a manipulation based on the touch report 3R and contents of the display information table 1T shown in Fig. 9 (c). When the manipulation is a flip manipulation as shown in Fig. 9 (a), the system controller 50 obtains a finger speed based on the touch report 3R and also an object speed (i.e., the interval at which display update requests 4Q are sent to the display controller 52), in the same way as described in item (3). The system controller 50 sends display update requests 4Q to the display controller 52, while updating the display position information left-top coordinates (X, Y) of the display information table 1T so that the object moves in the direction the finger moves. The system controller 50 stops moving the object when the above-mentioned interval reaches 2 seconds.

### (8) Flip-under-gravity manipulation (see Fig. 9.)

A flip-under-gravity manipulation is conducted in such a way as an object which is subjected to a gravity is flipped by a finger on the display surface of the display unit 3.

Fig. 9 is a diagram illustrating a flip manipulation.

When the finger manipulation is a flip as in the above item (8) and the display information table 1T defines the object type as "gravity" meaning that the object is subjected to gravity, for example, the object moves under the combined influences of inertia and simulated gravity, i.e. "falls" as shown in Fig. 9(b). Therefore, the system controller 50 sends display update requests 4Q to the display controller 52, while updating the display position information left-top coordinates (X, Y) by adding a value to the Y-coordinate of of the display information table 1T. The value is represented by 2 to the Nth power (N: the number of display update requests 4Q sent). In this case, too, the system controller 50 stops moving the object when the above-mentioned interval reaches 2 seconds. The resulting trajectory may be a parabola.

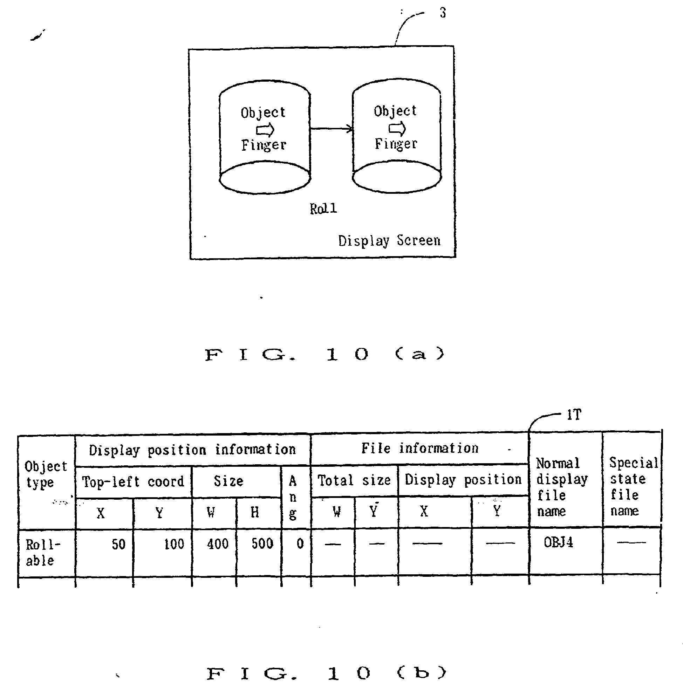

### (9) Roll manipulation (see Fig. 10.)

A roll manipulation is conducted in such a way as a rollable object is rolled by a finger on the display surface of the display unit 3.

Fig. 10 is a diagram illustrating a roll manipulation.

When a touch report 3R is input from the touch discriminator 51 and the display information table 1T defines the object type as "rollable" meaning that the object is constructed such that it rolls when flipped like a globe or a cylinder, as shown in Fig. 10(a), the system controller 50 sends display update requests 4Q to the display controller 52, while updating the display position information left-top coordinates (X, Y) of the display information table 1T so that the object moves a distance 10 per cent behind the distance and in the direction the finger moves.

### (10) Distort-restore manipulation (see Fig. 11.)

A distort-restore manipulation is conducted in such a way as an "elastic" object is pressed by a finger on the display surface of the display unit 3, thereby deforming the displayed object.

Fig. 11 is a diagram illustrating a distort-restore manipulation.

When a touch report 3R is input from the touch discriminator 51 and the display information table 1T defines the object type as "elastic" meaning that the object can be distorted and restored according to a pressure applied thereon by a finger, as shown in Fig. 11(a), the system controller 50 calculates an amount of distortion of the object based on the pressure reported by the touch report 3R. It stores in the display information table 1T, a special-state file name specifying one of special-state files (for displaying a distorted state of the object in turn-over indication) corresponding to the amount of distortion calculated. Then, the system controller 50 sends a display update request 4Q to the display controller 52, commanding that the special-state file be displayed at the current display position. When the above operation is repeated as necessary and a "continuous touch end" is reported by a touch report 3R, the system controller 50 sends a display update request 4Q (with a normal display file name specified) to the display controller 52, commanding that a normal display file (normal indication) be displayed at the current display position. A plurality of special-state files are provided in the hard disk 7, corresponding to the amount of distortion of the object, which results from a pressure applied on the touch screen 11.

As is apparent by the above description, the present invention regards a display screen as a virtual space. It defines conditions and physical properties of an object (e.g., weight, hardness, frictional resistance, center of gravity) in the display information table 1T. It also receives touch screen information 21 indicating a finger-touched position and pressure is input from a touch screen unit 1. Based on the touch screen information 21 and the display information table 1T, the present invention determines a manipulation to be conducted on the object displayed, e.g. scrolling, picking (up), pushing, rolling, distorting the object on the display surface of the display unit 3. Thus, the present invention allows a user to manipulate an object displayed on a display device quite easily, even when the user has little knowledge of computers.

## Claims

1. An apparatus for use with a display device (3) to manipulate an object displayed on the display device, the apparatus comprising:
a touch panel (11), representing a display surface of the display device (3), which is sensitive to characteristics of a touching contact on the touch panel, the characteristics including at least pressure and co-ordinate positions of the touching contact, for outputting corresponding touch panel information (2I) representing the characteristics of the touching contact on the touch panel (11); and
object manipulation means (7,50,51,52,1T) for manipulating and displaying the object on the display device in response to said touch panel information (2I), the object manipulation means comprising:
file storage means (7) for storing at least one data file which stores object data for displaying the object;
display information storage means (1T) for storing object information including an object type which specifies the shape or physical properties of the object, and display position information which specifies the position of the object on the display device (3); and
display control means (52) responsive to the touch panel information (2I) and to the object information included in said display information storage means, for recognizing the type of manipulation of the object in accordance with the touch panel information (21), the display position information, and the object type, and for performing the manipulation of the object on the display device (3) in accordance with the recognized type of manipulation; wherein the type of manipulation includes a distort-restore manipulation of the object in which said display control means (52) is responsive to the pressure characteristics of the touching contact to distort and restore the object on the display device, the amount of distortion of the object being calculated on the base of said pressure characteristics of the touching contact.

2. An apparatus as claimed in claim 1, wherein the type of manipulation further includes a moving manipulation of the object in which said display control means (52) is responsive to the changes of position of the touching contact to move the object from one position to another on the display device (3).

3. An apparatus as claimed in claim 1, wherein the file storage means (7) further stores a plurality of special-state files for displaying the object in a distorted state, each special-state file corresponding to a respective amount of distortion and specified based on the pressure characteristics of the touching contact.

4. An apparatus as claimed in claim 1, 2, or 3, wherein the touch panel (11) is mounted to the display device (3).

5. A controller for controlling a display device (3) to manipulate an object displayed on the display device based on information from a touch panel (11) representing a display surface of the display device (3) and sensitive to characteristics of a touching contact on the touch panel including at least pressure and co-ordinate positions of the touching contact;
the controller comprising:
outputting means (51) for outputting corresponding touch panel information (21) representing the characteristics of the touching contact on the touch panel (11) ; and
object manipulation means (50, 52, 1T) for manipulating and displaying the object on the display device in response to said touch panel information (2I), the object manipulation means comprising:
display information storage means (1T) for storing object information including an object type which specifies the shape or physical properties of the object, and display position information which specifies the position of the object on the display device (3); and
display control means (52) responsive to the touch panel information (2I) and to the object information included in said display information storage means, for recognizing the type of manipulation of the object in accordance with the touch panel information (2I), the display position information, and the object type, and for performing the manipulation of the object on the display device (3) in accordance with the recognized type of manipulation; wherein the type of manipulation includes a distort-restore manipulation of the object in which said display control means (52) is responsive to the pressure characteristics of the touching contact to distort and restore the object on the display device, the amount of distortion of the object being calculated on the base of said pressure characteristics of the touching contact.

## Patentansprüche

1. Vorrichtung zur Verwendung mit einer Anzeigeeinrichtung (3), um ein Objekt zu manipulieren, das an der Anzeigeeinrichtung angezeigt wird, welche Vorrichtung umfaßt:
ein Berührungsfeld (11), das eine Anzeigeoberfläche der Anzeigeeinrichtung (3) darstellt und gegenüber Charakteristiken eines Berührungskontaktes auf dem Berührungsfeld empfindlich ist, welche Charakteristiken wenigstens Druck- und Koordinatenpositionen des Berührungskontaktes enthalten, zum Ausgeben von entsprechenden Berührungsfeldinformationen (2I), die die Charakteristiken des Berührungskontaktes auf dem Berührungsfeld (11) darstellen; und
ein Objektmanipulationsmittel (7, 50, 51, 52, 1T) zum Manipulieren und Anzeigen des Objektes an der Anzeigeeinrichtung als Reaktion auf die Berührungsfeldinformationen (2I), welches Objektmanipulationsmittel umfaßt:
ein Dateispeichermittel (7) zum Speichern wenigstens einer Datendatei, die Objektdaten zum Anzeigen des Objektes speichert;
ein Anzeigeinformationsspeichermittel (1T) zum Speichern von Objektinformationen, die einen Objekttyp enthalten, der die Form oder die physischen Eigenschaften des Objektes spezifiziert, und von Anzeigepositiönsinformationen, die die Position des Objekt an der Anzeigeeinrichtung (3) spezifizieren; und
ein Anzeigesteuermittel (52), das auf die Berührungsfeldinformationen (21) und auf die Objektinformationen, die in dem Anzeigeinformationsspeichermittel enthalten sind, reagiert, zum Erkennen des Manipulationstyps des Objektes gemäß den Berührungsfeldinformationen (2I), den Anzeigepositionsinformationen und dem Objekttyp und zum Ausführen der Manipulation des Objektes an der Anzeigeeinrichtung (3) gemäß dem erkannten Manipulationstyp; wobei der Manipulationstyp eine Deformierungs-/Wiederherstellungsmanipulation des Objektes enthält, bei der das Anzeigesteuermittel (52) auf die Druckcharakteristiken des Berührungskontaktes reagiert, um das Objekt an der Anzeigeeinrichtung zu deformieren und wiederherzustellen, wobei der Deformierungsbetrag des Objektes auf der Basis der Druckcharakteristiken des Berührungskontaktes berechnet wird.

2. Vorrichtung nach Anspruch 1, wobei der Manipulationstyp ferner eine Bewegungsmanipulation des Objektes enthält, bei der das Anzeigesteuermittel (52) auf die Positionsveränderungen des Berührungskontaktes reagiert, um das Objekt an der Anzeigeeinrichtung (3) von einer Position zu einer anderen zu bewegen.

3. Vorrichtung nach Anspruch 1, bei der das Dateispeichermittel (7) ferner eine Vielzahl von Spezialzustandsdateien zum Anzeigen des Objektes in einem deformierten Zustand speichert, wobei jede Spezialzustandsdatei einem jeweiligen Deformierungsbetrag entspricht und auf der Basis der Druckcharakteristiken des Berührungsköntaktes spezifiziert ist.

4. Vorrichtung nach Anspruch 1, 2 oder 3, bei der das Berührungsfeld (11) an die Anzeigeeinrichtung (3) montiert ist.

5. Controller zum Steuern einer Anzeigeeinrichtung (3), um ein Objekt zu manipulieren, das an der Anzeigeeinrichtung angezeigt wird, auf der Basis von Informationen von einem Berührungsfeld (11), das eine Anzeigeoberfläche der Anzeigeeinrichtung (3) darstellt und gegenüber Charakteristiken eines Berührungskontaktes auf dem Berührungsfeld empfindlich ist, die wenigstens Druck- und Koordinatenpositionen des Berührungskontaktes enthalten;
welcher Controller umfaßt:
ein Ausgabemittel (51) zum Ausgeben von entsprechenden Berührungsfeldinformationen (21), die die Charakteristiken des Berührungskontaktes auf dem Berührungsfeld (11) darstellen; und
ein Objektmanipulationsmittel (50, 52, 1T) zum Manipulieren und Anzeigen des Objektes an der Anzeigeeinrichtung als Reaktion auf die Berührungsfeldinformationen (2I); welches Objektmanipulationsmittel umfaßt:
ein Anzeigeinformationsspeichermittel (1T) zum Speichern von Objektinformationen, die einen Objekttyp enthalten, der die Form oder die physischen Eigenschaften des Objektes spezifiziert, und von Anzeigepositionsinformationen, die die Position des Objektes an der Anzeigeeinrichtung (3) spezifizieren; und
ein Anzeigesteuermittel (52), das auf die Berührungsfeldinformationen (21) und auf die Objektinformationen, die in dem Anzeigeinformationsspeichermittel enthalten sind, reagiert, zum Erkennen des Manipulationstyps des Objektes gemäß den Berührungsfeldinformationen (21), den Anzeigepositionsinformationen und dem Objekttyp und zum Ausführen der Manipulation des Objektes an der Anzeigeeinrichtung (3) gemäß dem erkannten Manipulationstyp; wobei der Manipulationstyp eine Deformierungs-/Wiederherstellungsmanipulation des Objektes enthält, bei der das Anzeigesteuermittel (52) auf die Druckcharakteristiken des Berührungskontaktes reagiert, um das Objekt an der Anzeigeeinrichtung zu deformieren und wiederherzustellen, wobei der Defonnierungsbetrag des Objektes auf der Basis der Druckdharakteristiken des Berührungskontaktes berechnet wird.

## Revendications

1. Appareil pour une utilisation avec un dispositif d'affichage (3) afin de manipuler un objet qui est affiché sur le dispositif d'affichage, l'appareil comprenant:
un panneau tactile (11) qui représente une surface d'affichage du dispositif d'affichage (3), lequel panneau est sensible à des caractéristiques d'un contact d'effleurement sur le panneau tactile, les caractéristiques incluant au moins des positions de pression et de coordonnées du contact d'effleurement, pour émettre en sortie une information de panneau tactile correspondante (21) représentant les caractéristiques du contact d'effleurement sur le panneau tactile (11) ; et
un moyen de manipulation d'objet (7, 50, 51, 52, 1T) pour manipuler et afficher l'objet sur le dispositif d'affichage en réponse à ladite information de panneau tactile (2I), le moyen de manipulation d'objet comprenant :
un moyen de stockage de fichier (7) pour stocker au moins un fichier de données qui stocke des données d'objet pour afficher l'objet ;
un moyen de stockage d'information d'affichage (1T) pour stocker une information d'objet incluant un type d'objet qui spécifie les propriétés de forme ou physiques de l'objet et une information de position d'affichage qui spécifie la position de l'objet sur le dispositif d'affichage (3) ; et
un moyen de commande d'affichage (52) qui est sensible à l'information de panneau tactile (2I) et à l'information d'objet comme inclus dans ledit moyen de stockage d'information d'affichage, pour reconnaître le type de manipulation de l'objet conformément à l'information de panneau tactile (2I), à l'information de position d'affichage et au type d'objet et pour réaliser la manipulation de l'objet sur le dispositif d'affichage (3) conformément au type de manipulation reconnu, dans lequel le type de manipulation inclut une manipulation par distorsivn-restauration de l'objet selon laquelle ledit moyen de commande d'affichage (52) est sensible aux caractéristiques de pression du contact d'effleurement pour distordre et restaurer l'objet sur le dispositif d'affichage, la quantité de distorsion de l'objet étant calculée sur la base desdites caractéristiques de pression du contact d'effleurement.

2. Appareil selon là revendication 1, dans lequel le type de manipulation inclut en outre une manipulation par déplacement de l'objet selon laquelle le moyen de commande d'affichage (52) est sensible aux modifications de position du contact d'effleurement pour déplacer l'objet depuis une position jusqu'à une autre sur le dispositif d'affichage (3).

3. Appareil selon la revendication 1, dans lequel le moyen de stockage de fichier (7) stocke en outre une pluralité de fichiers d'états spéciaux pour afficher l'objet dans un état distordu, chaque fichier d'états spéciaux correspondant à une quantité respective de distorsion et étant spécifié sur la base des caractéristiques de pression du contact d'effleurement.

4. Appareil selon la revendication 1, 2 ou 3, dans lequel le panneau tactile (11) est monté sur le dispositif d'affichage (3).

5. Contrôleur pour commander un dispositif d'affichage (3) afin de manipuler un objet qui est affiché sur le dispositif d'affichage sur la base d'une information en provenance d'un panneau tactile (11) qui représente une surface d'affichage du dispositif d'affichage (3) et qui est sensible à des caractéristiques d'un contact d'effleurement sur le panneau tactile incluant au moins des positions de pression et de coordonnées du contact tactile,
le contrôleur comprenant :
un moyen d'émission en sortie (51) pour émettre en sortie une information de panneau tactile correspondante (21) qui représente les caractéristiques du contact d'effleurement sur le panneau tactile (11); et
un moyen de manipulation d'objet (50, 52, 1T) pour manipuler et afficher l'objet sur le dispositif d'affichage en réponse à ladite information de panneau tactile (2I), le moyen de manipulation d'objet comprenant :
un moyen de stockage d'information d'affichage (1T) pour stocker une information d'objet incluant un type d'objet qui spécifie les propriétés de forme ou physiques de l'objet et une information de position d'affichage qui spécifie la position de l'objet sur le dispositif d'affichage (3) ; et
un moyen de commande d'affichage (52) qui est sensible à l'information de panneau tactile (2I) et à l'information d'objet comme inclus dans ledit moyen de stockage d'information d'affichage pour reconnaître le type de manipulation de l'objet conformément à l'information de panneau tactile (2I), à l'information de position d'affichage et au type d'objet et pour réaliser la manipulation de l'objet sur le dispositif d'affichage (3) conformément au type de manipulation reconnu ; dans lequel le type de manipulation inclut une manipulation par distorsion-restauration de l'objet selon laquelle ledit moyen de commande d'affichage (52) est sensible aux caractéristiques de pression du contact d'effleurement pour distordre et restaurer l'objet sur le dispositif d'affichage, la quantité de distorsion de l'objet étant calculée sur la base desdites caractéristiques de pression du contact d'effleurement.
